# EUROPEAN PATENT APPLICATION

(11) **EP 4 226 997 A1**
(43) Date of publication of application: **16.08.2023**
(21) Application number: 22854762.6
(22) Date of filing: 24.10.2022
(51) Int. Cl.: B01J 8/04, B01J 8/00, B01J 19/00, B01D 53/62

(54) **REACTOR AND CARBONATION DEVICE COMPRISING SAME**

(30) Priority: 23.12.2021 KR 20210185780
(71) Applicant: Hyundai Oilbank Co., Ltd., Seosan-si, Chungcheongnam-do 31902 (KR)
(72) Inventor: KIM, Cheol Hyun, Yongin-si, Gyeonggi-do 16876 (KR); SUNG, Dae Jin, Gangdong-gu, Seoul 05274 (KR); LEE, Jeong Won, Suwon-si, Gyeonggi-do 16508 (KR); CHUNG, Yong Kwon, Bucheon-si, Gyeonggi-do 14779 (KR); YUN, Byung Kwon, Hwaseong-si, Gyeonggi-do 18297 (KR); LEE, Sang Hoon, Yeongwol-gun, Gwangwon-do 26209 (KR); RYU, Jeon Yel, Yeongwol-gun, Gwangwon-do 26209 (KR); LEE, Seung Ho, Cheongju-si, Chungcheongbuk-do 28115 (KR)
(74) Representative: Vossius & Partner Patentanwälte Rechtsanwälte mbB
(86) International application number: PCT/KR2022/016229
(87) International publication number: WO 2023/120927

(57) **Abstract**

The present disclosure relates to a reactor and carbonation equipment having the same, and the reactor (100) includes: a plurality of chambers (120, 130, 140); a support structure (110) for supporting the plurality of chambers (120, 130, 140); and a plurality of agitators (150, 160, 170) disposed correspondingly to the plurality of chambers (120, 130, 140) to agitate substances disposed in the plurality of chambers (120, 130, 140), wherein the plurality of chambers (120, 130, 140) comprise first to third chambers (120, 130, 140) coupled sequentially to one another in a thickness direction of the reactor (100), each chamber (120, 130, 140) comprising a body (121, 131, 141) having a lower portion having the shape of a semi-cylinder and an opening (TOP1, TOP2, BOP1, BOP2, BOP3) formed on the body (121, 131, 141) to communicate with the neighboring chamber (120, 130, 140) or the outside, the first chamber (120) having a first water introducing pipe (351) for supplying water to the first body (121), the second chamber (130) having a second water introducing pipe (352) for supplying water to the second body (131) and a first gas introducing pipe (441) for supplying gas to the second body(131), and the third chamber (140) having a second gas introducing pipe (442) for supplying gas to the third body (141).

## Description

### Technical Field

The present invention relates to a reactor and carbonation equipment having the same, and more specifically, to a reactor and carbonation equipment having the same that are capable of utilizing a recycled resource to reduce greenhouse gas emissions and making a carbonation process and a drying process performed unitarily with each other as a semi-dry process to reduce processing and manufacturing costs.

### Background Art

The average annual greenhouse gas emissions in South Korea between 2007 and 2017 amount to 662 million metric tons of CO₂ equivalent (MtCO₂eq), and more than 94% of greenhouse gases are emitted in energy and industrial processing fields. Among the greenhouse gases, carbon dioxide has a global warming potential (GWP) value of 1 lower than global warming potential values other greenhouses gases have, but CO₂ emissions are 604 MtCO₂eq, which occupies more than 91% of the total greenhouse gas emissions. Further, Korean total greenhouse emissions in 2017 compared to 2007 are increased by 23%, which emerges seriousness.

Precipitated Calcium Carbonate (CaCO₃) (PCC) is used as an additive and a filler for improving a product quality in food, paper, rubber, plastic, and paint industrial fields. A conventional PCC manufacturing method is performed by removing carbon dioxide from mined limestone, at a high temperature, making calcium oxide, and allowing the calcium oxide to react with carbon dioxide.

However, the conventional PCC manufacturing method needs a high processing cost because of a heat source used to turn the limestone into calcium oxide and has a bad influence on environments because of the greenhouse gases such as carbon dioxide dissociated and generated from the heat source and the limestone.

Therefore, there is a definite need to develop a method capable of reducing greenhouse gas emissions and a processing cost, while producing calcium carbonate (CaCO₃) used as a raw material in various industrial fields.

### Disclosure

### Technical Problem

Accordingly, the present invention has been made in view of the above-mentioned problems occurring in the related art, and it is an object of the present invention to provide a reactor and carbonation equipment having the same that are capable of utilizing a recycled resource containing calcium oxide (CaO) and exhaust gas as raw materials to reduce greenhouse gas emissions and making a carbonation process and a hydration process performed in the single reactor to provide the simplification of the processing and the reduction of the manufacturing cost.

The technical problems to be achieved through the present invention are not limited as mentioned above, and other technical problems not mentioned herein will be obviously understood by one of ordinary skill in the art through the following description.

### Technical Solution

To accomplish the above-mentioned objects, according to an aspect of the present invention, there is provided a reactor including: a plurality of chambers; a support structure for supporting the plurality of chambers; and a plurality of agitators disposed correspondingly to the plurality of chambers to agitate substances disposed in the plurality of chambers, wherein the plurality of chambers may include first to third chambers coupled sequentially to one another in a thickness direction of the reactor, each chamber including a body having a lower portion having the shape of a semi-cylinder and an opening formed on the body to communicate with the neighboring chamber or the outside, the first chamber having a first water introducing pipe for supplying water to the first body, the second chamber having a second water introducing pipe for supplying water to the second body and a first gas introducing pipe for supplying gas to the second body, and the third chamber having a second gas introducing pipe for supplying gas to the third body.

The first chamber may include a raw material introducing hole formed on one side of top of the first body to receive a raw material and a first bottom opening formed on the other side of bottom of the first body to communicate with the second chamber, the first bottom opening having a first protrusion protruding upward therefrom, and the first agitator disposed correspondingly to the first chamber may agitate the first substance in the first chamber and move the first substance from one side to the other side of the first body.

The raw material is a recycled resource containing calcium oxide (CaO).

The second chamber may include a first top opening formed on the other side of top of the second body to be connected to the first bottom opening and a second bottom opening formed on one side of bottom of the second body to communicate with the third chamber, the second bottom opening having a second protrusion protruding upward therefrom, and the second agitator disposed correspondingly to the second chamber may agitate the second substance in the second chamber and move the second substance from the other side to one side of the second body.

The gas may be exhaust gas containing carbon dioxide (CO₂) and the second substance may contain calcium oxide (CaO) and calcium hydroxide (Ca(OH)₂).

The third chamber may include a second top opening formed on one side of top of the third body to be connected to the second bottom opening and a third bottom opening formed on the other side of bottom of the third body to communicate with the outside, the third bottom opening having a third protrusion protruding upward therefrom, and the third agitator disposed correspondingly to the third chamber may agitate the third substance in the third chamber and move the third substance from one side to the other side of the third body.

The gas may be exhaust gas containing carbon dioxide (CO₂) and the third substance may contain calcium hydroxide (Ca(OH)₂) and calcium carbonate (CaCO₃).

The first chamber may include a gas outlet formed on one side of top of the first body to emit the remaining gas after the reactions in the first to third chambers, and the gas outlet may be connected to an exhaust fan and a dust collector for allowing the internal pressures of the first to third chamber to be kept lower than an atmospheric pressure.

Each agitator may include: a driving motor for converting electrical energy into mechanical energy; a gear connected to the driving motor to convert the mechanical energy into revolutions per minute needed for the agitating; an agitating shaft connected to the gear to transfer a rotary force according to the revolutions per minute; and a plurality of agitating wings spaced apart from one another on the agitating shaft to rotate in circular orbits according to the rotation of the agitating shaft.

The first water introducing pipe and the second water introducing pipe may be disposed close to upper portions of the first body and the second body to supply the water in downward directions, and the first gas introducing pipe and the second gas introducing pipe may be disposed close to lower portions of the second body and the third body.

To accomplish the above-mentioned objects, according to another aspect of the present invention, there is provided carbonation equipment including: a raw material tank for storing a raw material containing calcium oxide (CaO); a raw material transfer machine for transferring the raw material to a reactor; the reactor for allowing the raw material to react with water and carbon dioxide to produce calcium carbonate (CaCO₃); water introducing pipes for supplying the water to the reactor; and gas introducing pipes for supplying gas containing the carbon dioxide to the reactor.

The water introducing pipes may include a first water introducing pipe and a second water introducing pipe, and the gas introducing pipes may include a first gas introducing pipe and a second gas introducing pipe; the reactor may include: a plurality of chambers; a support structure for supporting the plurality of chambers; and a plurality of agitators disposed correspondingly to the plurality of chambers to agitate substances disposed in the plurality of chambers, the plurality of chambers including first to third chambers coupled sequentially to one another in a thickness direction of the reactor, each chamber including a body having a lower portion having the shape of a semi-cylinder and an opening formed on the body to communicate with the neighboring chamber or the outside; and the first water introducing pipe penetrates the first body of the first chamber, the second water introducing pipe and the first gas introducing pipe penetrate the second body of the second chamber, and the second gas introducing pipe penetrates the third body of the third chamber.

The first chamber may include a raw material introducing hole formed on one side of top of the first body to receive the raw material; the first chamber, the second chamber, and the third chamber may include first to third bottom openings formed on the bottoms of the first body, the second body, and the third body to communicate with the neighboring chambers or the outside; and the raw material introducing hole and the first to third bottom openings may be misalignedly formed on the opposite side to each other in a horizontal direction of the reactor.

The first agitator disposed correspondingly to the first chamber may move the substance in the first chamber from the raw material introducing hole to the first bottom opening; the second agitator disposed correspondingly to the second chamber may move the substance in the second chamber from the first bottom opening to the second bottom opening; and the third agitator disposed correspondingly to the third chamber may move the substance in the third chamber from the second bottom opening to the third bottom opening.

The first to third bottom openings may include first to third protrusions protruding upward therefrom.

Each agitator may include: a driving motor for converting electrical energy into mechanical energy; a gear connected to the driving motor to convert the mechanical energy into revolutions per minute needed for the agitating; an agitating shaft connected to the gear to transfer a rotary force according to the revolutions per minute; and a plurality of agitating wings spaced apart from one another on the agitating shaft to rotate in circular orbits according to the rotation of the agitating shaft.

The first water introducing pipe and the second water introducing pipe may be disposed close to upper portions of the first body and the second body to supply the water in downward directions, and the first gas introducing pipe and the second gas introducing pipe may be disposed close to lower portions of the second body and the third body.

The carbonation equipment may further include: a dust collector for emitting the remaining gas in the reactor; and an exhaust fan disposed inside the dust collector to allow the internal pressure of the reactor to be lower than an atmospheric pressure, the first chamber having a gas outlet formed on one side of top of the first body to emit the remaining gas, the gas outlet being connected to the dust collector.

The carbonation equipment may further include: a blower coupled to one end of a gas transfer pipe, absorbing external air, and to move the absorbed air to the gas transfer pipe; a carbon dioxide storage cylinder coupled to the gas transfer pipe to supply carbon dioxide; and a heater for heating the gas moving along the gas transfer pipe, the other end of the gas transfer pipe being connected to the gas introducing pipe.

The gas introducing pipe may be connected to another processing device for emitting exhaust gas.

Other aspects of the embodiments of the present invention will be suggested in detail in the description and the attached drawings.

### Advantageous Effects

According to the embodiments of the present invention, the reactor and the carbonation equipment having the same make use of the recycled resource containing calcium oxide (CaO) and the exhaust gas as raw materials, thereby reducing greenhouse gas emissions.

According to the embodiments of the present invention, further, the reactor and the carbonation equipment having the same allow the hydration and carbonation processes to be performed in the single reactor, thereby simplifying the processing and reducing the manufacturing cost of calcium carbonate (CaCO₃).

The effectiveness of the invention is not limited as mentioned above, and it should be understood to those skilled in the art that the effectiveness of the invention may include another effectiveness as not mentioned above from the detailed description of the present invention.

### Brief Description of Drawings

FIG. 1 is a schematic view showing carbonation equipment according to an embodiment of the present invention.
FIG. 2 is a plan view showing the carbonation equipment according to the embodiment of the present invention.
FIG. 3 is a front view showing the carbonation equipment according to the embodiment of the present invention.
FIG. 4 is a right side view showing the carbonation equipment according to the embodiment of the present invention.
FIG. 5 is a front view showing a reactor according to an embodiment of the present invention.
FIG. 6 is a right side view showing the reactor according to the embodiment of the present invention.
FIG. 7 is a right side view showing a path along which hydration and carbonation processes are carried out in the reactor of FIGs. 5 and 6.

### Mode for Invention

Objects, characteristics and advantages of the present invention will be more clearly understood from the detailed description as will be described below and the attached drawings. However, the present invention may be modified in various ways and may have several exemplary embodiments. Therefore, specific structural and functional details disclosed herein are not to be interpreted as limiting, but merely as a basis for the claims and as a representative basis for teaching one of ordinary skill in the art to variously employ the present invention in virtually any appropriately detailed structure.

In the description, when it is said that an element or layer is located "on" another element or layer, it means that one element or layer may be just above another element or as well as yet another element or layer may exist between the two elements or layers. The corresponding parts in the embodiments of the present invention are indicated by corresponding reference numerals. The shapes, sizes, percentages, angles, and numbers suggested in the drawings are just exemplary to explain the embodiments of the present invention, and therefore, the present invention may not be limited thereto.

Terms, such as the first, and the second may be used to describe various components, but the components should not be restricted by the terms. The terms are used to only distinguish one component from the other component. Therefore, a first component as will be described below may become a second component within the technical scope of the present invention.

Hereinafter, exemplary embodiments of the present invention will be described with reference to attached drawings.

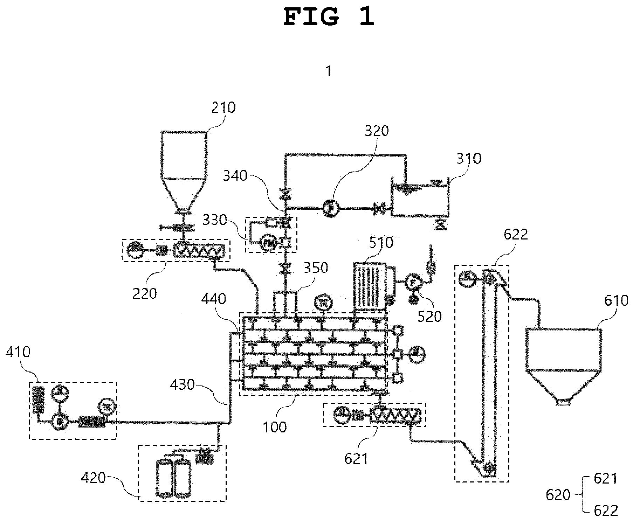

FIG. 1 is a schematic view showing carbonation equipment according to an embodiment of the present invention.

The carbonation equipment according to an embodiment of the present invention makes use of desulfurized gypsum (CaO·CaSO₄), which is a by-product of a desulfurization process, as a raw material containing calcium oxide (CaO), to produce calcium carbonate (CaCO₃), but the present invention is not limited necessarily thereto. For example, the carbonation equipment may make use of ash produced in a power plant or slag produced in a steel mill, which contains calcium oxide (CaO) or calcium hydroxide (Ca(OH)₂), to produce calcium carbonate (CaCO₃). Further, the carbonation equipment according to embodiments of the present invention is utilized as a system for producing a final product by reactions of a raw material with water and gas.

Referring to FIG. 1, the carbonation equipment 1 according to an embodiment of the present invention includes a reactor 100, a raw material tank 210, a raw material transfer machine 220, a water tank 310, a water pump 320, a flow meter 330, a water transfer pipe 340, a water introducing pipe 350, a hot air blower 410, a carbon dioxide storage cylinder 420, a gas transfer pipe 430, a gas introducing pipe 440, a dust collector 510, an exhaust fan 520, a product storage tank 610, and a product transfer machine 620.

In the specification, the carbonation equipment 1 according to the embodiment of the present invention includes the hot air blower 410 and the carbon dioxide storage cylinder 420, but it may not be limited thereto. For example, the hot air blower 410 and the carbon dioxide storage cylinder 420 of the carbonation equipment 1 may be connected to an exhaust gas storage tank or an exhaust gas emitting device and thus serve as a passage into which exhaust gas is introduced. In this case, the carbonation equipment 1 makes use of the exhaust gas in making calcium carbonate (CaCO₃), thereby contributing to the reduction of greenhouse gas emissions.

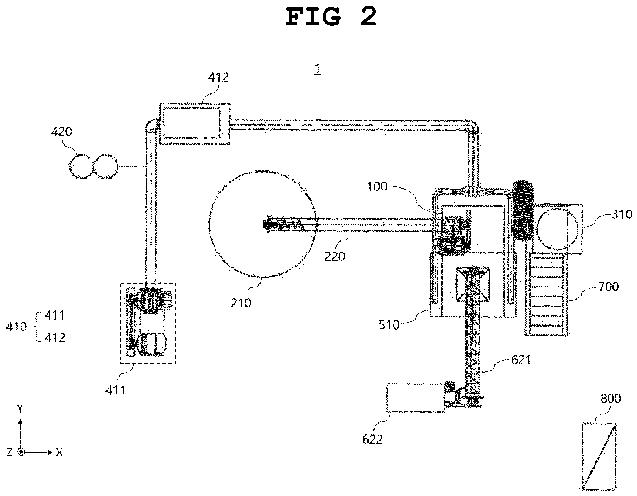

In FIGs. 2 to 7, a first direction (a direction of X-axis), a second direction (a direction of Y-axis) vertical with respect to the same plane as the first direction (the direction of X-axis), and a third direction (a direction of Z-axis) vertical with respect to the plane of the first direction (the direction of X-axis) and the second direction (the direction of Y-axis) are represented. The first direction (the direction of X-axis), the second direction (the direction of Y-axis), and the third direction (the direction of Z-axis) are suggested to explain the configurations and operations of the parts constituting the carbonation equipment 1, which mean relative directions to one another. Accordingly, the embodiment of the present invention is not limited to the above-mentioned directions.

The first direction (the direction of X-axis) is in parallel with one side of the carbonation equipment 1 when viewed on plane, and for example, the first direction is the vertical direction of the carbonation equipment 1. The second direction (the direction of Y-axis) is in parallel with the other side coming into contact with one side of the carbonation equipment 1 when viewed on plane, and for example, the second direction is the horizontal direction of the carbonation equipment 1. The third direction (the direction of Z-axis) is the thickness direction of the carbonation equipment 1.

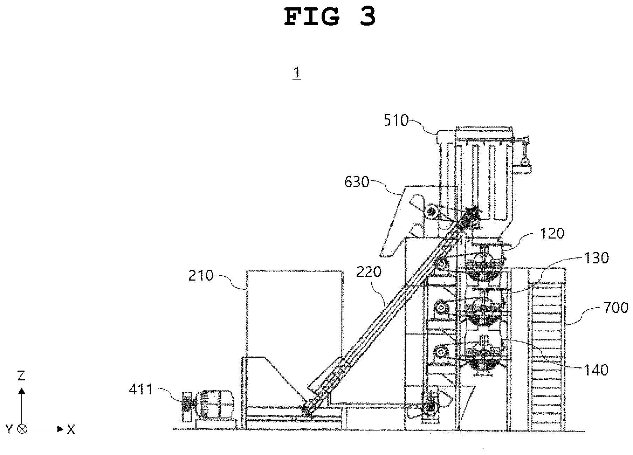

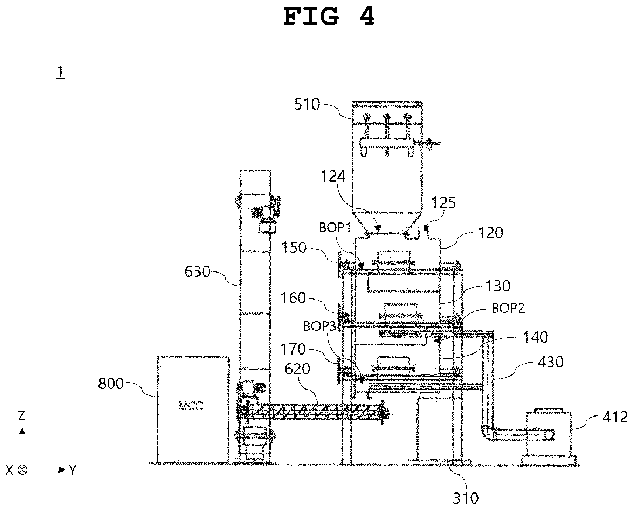

FIG. 2 is a plan view showing the carbonation equipment according to the embodiment of the present invention, FIG. 3 is a front view showing the carbonation equipment according to the embodiment of the present invention, and FIG. 4 is a right side view showing the carbonation equipment according to the embodiment of the present invention.

Referring to FIGs. 2 to 4, the reactor 100 includes a support structure 110, a first chamber 120, a second chamber 130, a third chamber 140, and a plurality of agitators 150, 160, and 170 adapted to agitate substances disposed in the first to third chambers 120, 130, and 140 to transfer the agitated substances in the second direction (the direction of Y-axis) or in the opposite direction to the second direction (the direction of Y-axis).

The first chamber 120, the second chamber 130, and the third chamber 140 have at least one opening formed thereon so that their inner spaces communicate with one another or the outside. The water introducing pipe 350 and/or the gas introducing pipe 440 are inserted into the first chamber 120, the second chamber 130, and the third chamber 140 to supply water and/or gas to the chambers.

If a raw material is introduced into the reactor 100, the raw material moves the first chamber 120, the second chamber 130, and the third chamber 140 sequentially and reacts with the water and/or gas. For example, if the water introducing pipe 350 is inserted into the first chamber 120 and the second chamber 130, respectively and the gas introducing pipe 440 is inserted into the third chamber 140, the raw material reacts with the water in the first chamber 120 and the second chamber 130 and with the gas in the second chamber 130 and the third chamber 140, so that a final product is produced.

In specific, the raw material containing calcium oxide (CaO) reacts with the water (H₂O) in the first chamber 120 and the second chamber 130 to produce calcium hydroxide (Ca(OH)₂), and the calcium hydroxide (Ca(OH)₂) reacts with the gas containing carbon dioxide (CO₂) in the second chamber 130 and the third chamber 140 to produce calcium carbonate (CaCO₃) as the final product.

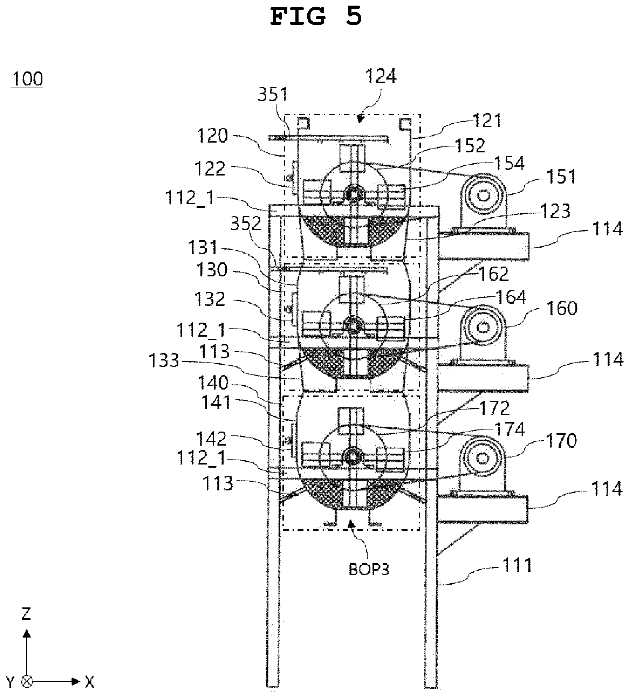

According to the embodiment of the present invention, like this, the reactor 100 allows the hydration process of calcium oxide (CaO) and the carbonation process of calcium hydroxide (Ca(OH)₂) to be carried out sequentially therein in a semi-dry process to produce calcium carbonate (CaCO₃). Accordingly, the carbonation process using a recycled resource as the raw material is more simplified than a wet process, thereby advantageously reducing the time and cost required to manufacture calcium carbonate (CaCO₃). Further, exhaust gas is utilized as the gas containing carbon dioxide (CO₂), thereby greatly contributing to the reduction of greenhouse gas emissions. An explanation of the reactor 100 will be given in more detail later with reference to FIGs. 5 to 7.

The raw material tank 210 may be a raw material hopper for storing the raw material. The raw material tank 210 has a circular sectional shape on plane, and when viewed on the front, it has a width of the first direction (the direction of X-axis) gradually reduced as it goes toward the lower portion thereof so that it has the sectional shape of V. However, the raw material tank 210 is not limited in shape thereto, and accordingly, the raw material tank 210 may be freely selected from various raw material hoppers known to a person having ordinary skill in the art. Further, a raw material silo may be used as the raw material tank 210.

The raw material tank 210 include openings (not shown) formed on top and underside thereof. The opening formed on top of the raw material tank 210 serves as a raw material introducing hole 125 into which the raw material is introduced. In the embodiments of the present invention, the raw material introducing hole 125 is kept closed by means of a cover member (not shown) while the raw material is being not introduced into the raw material tank 210. The opening formed on underside of the raw material tank 210 is coupled to the raw material transfer machine 220. However, the openings of the raw material tank 210 may not be limited thereto. Accordingly, the raw material stored in the raw material tank 210 is introduced into the reactor 100 through the raw material transfer machine 220.

In the specification, even though not described in specific, the raw material tank 210 may include at least one environment sensing and keeping device adapted to sense and keep environments such as moisture, pressure, temperature, and the like of the internal space in which the raw material is stored or a flow assistant device (not shown) adapted to prevent the flow of raw material from being stopped owing to bridge of the raw material. In embodiments of the present invention, further, the raw material tank 210 may include a raw material metering device and/or raw material automatic discharge device adapted to discharge the raw material according to predetermined time and/or an amount of raw material discharged.

The raw material transfer machine 220 is coupled to the raw material tank 210 to transfer the raw material stored in the raw material tank 210 to the reactor 100. The raw material transfer machine 220 is a screw feeder for rotating a screw to move an object, but it is not limited thereto. For example, the raw material transfer machine 220 may be a conveyor or a bucket elevator that is adapted to introduce the raw material discharged from the raw material tank 210 into the reactor 100 according to the predetermined time and amount.

In FIGs. 2 to 4, further, the raw material transfer machine 220 is a slant screw feeder, but it is not limited thereto. For example, the raw material transfer machine 220 may be freely provided by combining a horizontal screw feeder and a vertical screw feeder or a bucket elevator.

The water tank 310 is a water reservoir in which water is received and stored and has various shapes such as a rectangular parallelepiped, a cylinder, a cone having a V-shaped vertical section, and the like. In embodiments of the present invention, the water tank 310 may include a sensor for measuring a water pressure on an outlet thereof and a sensor for measuring a temperature of water.

The water stored in the water tank 310 is discharged through the water pump 320 and thus supplied to the reactor 100 through the water introducing pipe 350. The water pump 320 is disposed between the water tank 310 and the water transfer pipe 340 to discharge and pressurize the water according to predetermined amount and time.

In the specification, the water tank 310 is disposed on the floor, and the water pump 320 is a pressurizing pump for supplying the water to the reactor 100. However, the present invention may not be limited thereto. For example, the water tank 310 may be located at a higher position than the water introducing pipe 350, and the water pump 320 has only the function of discharging water according to the predetermined amount and time.

The flow meter 330 is disposed on the water transfer pipe 340 to measure the flow rate of water. The flow meter 330 may be freely selected from a differential pressure type flow meter, a positive displacement flow meter, and a variable area flow meter. In embodiments of the present invention, further, the flow meter 330 may be a flow meter with a valve that is adapted to adjust a flow rate.

The water introducing pipe 350 is connected to the water transfer pipe 340 along which water moves to supply the water to the reactor 100. The water introducing pipe 350 includes a first water introducing pipe 351 (See FIG. 5) and a second water introducing pipe 352 (See FIG. 5).

The first water introducing pipe 351 and the second water introducing pipe 352 have a plurality of nozzles. For example, the first water introducing pipe 351 and the second water introducing pipe 352 have four nozzles, respectively, but they may not be limited thereto. For example, the first water introducing pipe 351 and the second water introducing pipe 352 have three or less nozzles, respectively or five or more nozzles, respectively. Further, the nozzles for discharging the water are spray nozzles for spraying fine water particles, but they may not be limited thereto.

The first water introducing pipe 351 and the second water introducing pipe 352 are adjacent to the first chamber 120 and the second chamber 130, respectively, and a plurality of extension pipes (not shown) connected to the plurality of nozzles may penetrate the side peripheries of the first chamber 120 and the second chamber 130 and be thus inserted thereinto. Accordingly, the water moving though the first water introducing pipe 351 is supplied to the inside of the first chamber 120, and the water moving through the second water introducing pipe 352 to the inside of the second chamber 130.

In embodiments of the present invention, the first water introducing pipe 351 and the second water introducing pipe 352 may penetrate the fronts of the first chamber 120 and the second chamber 130 and be thus inserted thereinto, so that water is supplied to the first chamber 120 and the second chamber 130 through the plurality of nozzles.

Further, the plurality of nozzles of the first water introducing pipe 351 and the plurality of nozzles of the second water introducing pipe 352 are located on the upper portions of the internal spaces of the first chamber 120 and the second chamber 130 to supply water in downward directions.

The hot air blower 410 includes a blower 411 for generating air to move the air to the gas transfer pipe 430 and a heater 412 coupled between the blower 411 and the gas transfer pipe 430 to heat the air. Even though not shown in detail in FIGs. 2 to 4, the gas transfer pipe 430 may have a carbon dioxide introducing hole (not shown) coupled to the carbon dioxide storage cylinder 420 to supply carbon dioxide.

The hot air blower 410 and the carbon dioxide storage cylinder 420 serve to supply air and carbon dioxide, heat the mixed gas of the air and carbon dioxide to a temperature of 160 to 180°C, and supply the heated gas to the reactor 100 through the gas introducing pipe 440.

In FIGs. 2 to 4, the carbonation equipment 1 includes the hot air blower 410 and the carbon dioxide storage cylinder 420 adapted to supply the gas reacting with calcium hydroxide (Ca(OH)₂), but it may not be limited thereto.

For example, the carbonation equipment 1 may make use of exhaust gas as the gas reacting with calcium hydroxide (Ca(OH)₂), so that it does not have the hot air blower 410 and the carbon dioxide storage cylinder 420. In this case, the gas transfer pipe 430 of the carbonation equipment 1 may be connected to another processing device (for example, an exhaust gas outlet) for emitting exhaust gas, and the exhaust gas emitted from another processing device may be supplied to the reactor 100 through the gas transfer pipe 430 and the gas introducing pipe 440. In this case, the exhaust gas contains carbon dioxide and has about 160 to 180°C, but it may not be limited thereto.

In other words, it will be understood that the hot air blower 410 and the carbon dioxide storage cylinder 420 of the carbonation equipment 1, as shown in FIGs. 2 to 4, serve to imitate the formation for the exhaust gas emitted from another processing device.

That is, the carbonation equipment 1 of the present invention makes use of the recycled resource containing calcium oxide (CaO) and the exhaust gas containing carbon dioxide emitted in various processes as raw materials for producing calcium carbonate (CaCO₃), thereby decreasing an amount of waste generated and reducing greenhouse gas emissions.

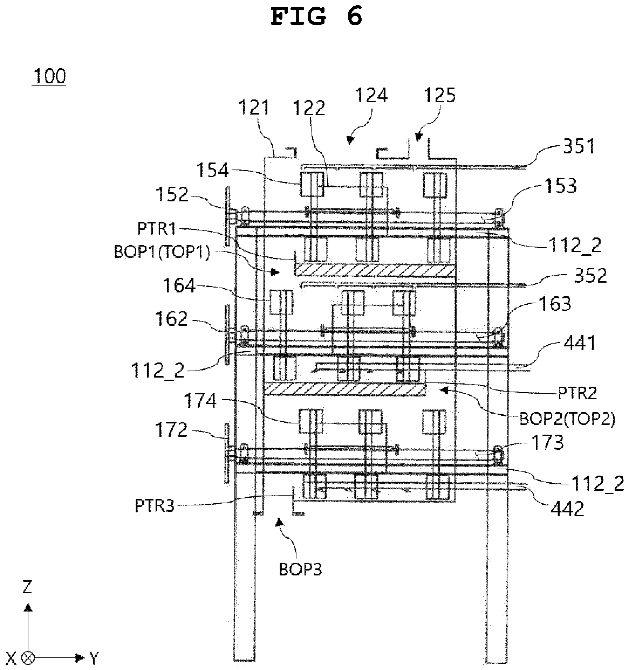

The gas introducing pipe 440 is connected to the gas transfer pipe 430 to supply gas to the reactor 100. The gas introducing pipe 440 includes a first gas introducing pipe 441 (See FIG. 6) and a second gas introducing pipe 442 (See FIG. 6).

The first gas introducing pipe 441 and the second gas introducing pipe 442 have a plurality of nozzles. For example, the first gas introducing pipe 441 and the second gas introducing pipe 442 have four nozzles, respectively, but they may not be limited thereto. For example, the first gas introducing pipe 441 and the second gas introducing pipe 442 have three or less nozzles, respectively or five or more nozzles, respectively. Further, the nozzles for discharging the gas are freely selected from various types of nozzles.

The first gas introducing pipe 441 and the second gas introducing pipe 442 are adjacent to the second chamber 130 and the third chamber 140, and a plurality of extension pipes (not shown) connected to the plurality of nozzles may penetrate the side peripheries of the second chamber 130 and the third chamber 140 and be thus inserted thereinto. Accordingly, the gas moving though the first gas introducing pipe 441 is supplied to the inside of the second chamber 130, and the gas moving through the second gas introducing pipe 442 to the inside of the third chamber 140.

In embodiments of the present invention, the first gas introducing pipe 441 and the second gas introducing pipe 442 may penetrate the fronts of the second chamber 130 and the third chamber 140 and be thus inserted thereinto, so that gas is supplied to the second chamber 130 and the third chamber 140 through the plurality of nozzles.

Further, the plurality of nozzles of the first gas introducing pipe 441 and the plurality of nozzles of the second gas introducing pipe 442 are located on the lower portions of the internal spaces of the second chamber 130 and the third chamber 140 to supply gas in upward directions.

The dust collector 510 is located above the reactor 100 to emit the remaining gas after the reactions in the reactor 100. For example, the dust collector 510 is coupled to a gas outlet 124 of the first chamber 120 to absorb the remaining gas from the first chamber 120.

For example, the dust collector 510 may be a bag filter. Accordingly, the raw material introduced into the reactor 100 and the final product produced after the reactions are absorbed to the dust collector 510 and prevented from being discharged to the outside.

The exhaust fan 520 may be disposed inside the dust collector 510. The exhaust fan 520 serves to allow the internal pressure of the reactor 100 to be lower than an atmospheric pressure. Accordingly, the flow of gas in the reactor 100 is formed in a direction toward the dust collector 510. Without being limited thereto, however, the exhaust fan 520 may be disposed outside the dust collector 510 and connected to the dust collector 510 by means of an exhaust passage.

The product storage tank 610 is a tank in which the final product produced in the reactor 100 is stored. The product storage tank 610 may be a hopper or silo, but it may not be limited thereto. For example, the product storage tank 610 may be a storage burlap bag easy to be delivered.

The product transfer machine 620 serves to transfer the final product (for example, calcium carbonate) produced in the reactor 100 to the product storage tank 610. For example, the product transfer machine 620 includes a first product transfer machine 621 and a second product transfer machine 622. The first product transfer machine 621 is a horizontal screw feeder that has one end located under the reactor 100, and the second product transfer machine 622 is a bucket elevator that has one end disposed on the other end of the first product transfer machine 621 and the other end located above the product storage tank 610. Without being limited thereto, however, the product transfer machine 620 may be freely selected from a slant screw feeder and various transfer devices.

Like this, the carbonation equipment 1 according to the embodiment of the present invention makes use of the recycled resource containing calcium oxide (CaO) and the exhaust gas containing carbon dioxide emitted in various processes as raw materials for producing calcium carbonate (CaCO₃), thereby decreasing an amount of waste generated and reducing greenhouse gas emissions.

Further, the carbonation equipment 1 according to the embodiment of the present invention includes the reactor 100 allowing the hydration process of calcium oxide (CaO) and the carbonation process of calcium hydroxide (Ca(OH)₂) to be carried out sequentially therein to produce calcium carbonate (CaCO₃) in a semi-dry process. Accordingly, the carbonation using the semi-dry process is more simplified than the carbonation using a wet process, thereby advantageously reducing the time and cost required to produce calcium carbonate (CaCO₃).

Referring to FIGs. 2 and 3, the carbonation equipment 1 further includes a ladder 700 and a motor controller 800. The ladder 700 is disposed close to the reactor 100 and serves as an auxiliary part for controlling the reactor 100 operating the carbonation equipment 1.

The motor controller 800 serves to supply power to the agitators 150, 160, and 170 and control the rotations of the agitators 150, 160, and 170, while being electrically connected to the agitators 150, 160, and 170. The motor controller 800 may be a motor control center.

Hereinafter, a configuration and an operating method of the reactor 100 will be explained with reference to FIGs. 5 to 7.

FIG. 5 is a front view showing a reactor according to an embodiment of the present invention, and FIG. 6 is a right side view showing the reactor according to the embodiment of the present invention.

Referring to FIGs. 5 and 6, the reactor 100 includes the support structure 110, the three chambers 120, 130, and 140, and the three agitators 150, 160, and 170.

The support structure 110 serves to support the three chambers 120, 130, and 140 and the three agitators 150, 160, and 170. For example, the support structure 110 is made by coupling a plurality of rectangular parallelepiped frames to one another.

In the embodiment of the present invention, the support structure 110 includes four vertical support rods 111, ten horizontal support rods 112, and three side protrusions 114. The ten horizontal support rods 112 include six longitudinal support rods 112_1 and four transverse support rods 112_2.

The four vertical support rods 111 have the shapes extending in the third direction (the direction of Z-axis), while being located on the corners of a rectangle on plane. The six longitudinal support rods 112_1 have the shapes extending in the first direction (the direction of X-axis), while being located to provide the sides of the first direction (the direction of X-axis) of three rectangles overlaid on plane, and the four transverse support rods 112_2 have the shapes extending in the second direction (the direction of Y-axis), while being located to provide the sides of the second direction (the direction of Y-axis) of two rectangles overlaid on plane.

Accordingly, the six longitudinal support rods 112_1 of the support structure 110 traverse the first chamber 120, the second chamber 120, or the third chamber 140 in the first direction (the direction of X-axis), and the four transverse support rods 112_2 traverse the first chamber 120 or the third chamber 140 in the second direction (the direction of Y-axis).

The support structure 110 further includes a plurality of chamber underside support rods 113 connecting the vertical support rods 111 and the second chamber 130 or the third chamber 140 to one another. The plurality of chamber underside support rods 113 protrude upward from the vertical support rods 111 in oblique directions and are thus connected to the undersides of the second chamber 130 and the third chamber 140. The plurality of chamber underside support rods 113 serve to support the undersides of the second chamber 130 and the third chamber 140.

Further, the three side protrusions 114 protrude from the vertical support rods 111 in the first direction (the direction of X-axis). The three side protrusions 114 serve to support the first to third agitators 150, 160, and 170.

In the specification, the shape and configuration of the support structure 110 according to the embodiment of the present invention have been explained in detail, but they may not be limited thereto. The support structure 110 may be changed in shape and configuration only if it supports the first to third chambers 120, 130, and 140 and the first to third agitators 150, 160, and 170.

The first to third chambers 120, 130, and 140 are coupled sequentially to one another in the third direction (the direction of Z-axis or in the direction of thickness). For example, the third chamber 140, the second chamber 130, and the first chamber 120 are disposed in the third direction (the direction of Z-axis), so that the upper chamber of the reactor 100 is the first chamber 120, the lower chamber is the third chamber 130, and the intermediate chamber between the first chamber 120 and the third chamber 140 is the second chamber 130.

The first chamber 120, the second chamber 130, and the third chamber 140 include bodies 121, 131, and 141 and side doors 122, 132, and 142. The bodies 121, 131, and 141 have square sectional shapes on upper portions and semi-circular sectional shapes on lower portions, when viewed on the fronts thereof, and have rectangular sectional shapes whose widths of the second direction (the direction of Y-axis) larger than the widths of the third direction (the direction of Z-axis), when viewed on the right side thereof. That is, the bodies 121, 131, and 141 have the combined shapes of rectangular parallelepipeds and semicylinders.

The semi-circular structures of the lower portions of the bodies 121, 131, and 141 are the same as paths along which a plurality of agitating wings 154, 164, and 174 of the first to third agitators 150, 160, and 170 rotate around agitating shafts 153, 163 and 173. Without being limited thereto, however, the semi-circular structures of the lower portions of the bodies 121, 131, and 141 may be spaced apart from the paths along which the plurality of agitating wings 154, 164, and 174 rotate by given distances.

The side doors 122, 132, and 142 are disposed on the right sides of the bodies 121, 131, and 141. The side doors 122, 132, and 142 are openable and closable doors and have smaller areas than the right sides of the bodies 121, 131, and 141. An operator of the reactor 100 checks the interiors of the bodies 121, 131, and 141 through the side doors 122, 132, and 142. In embodiments of the present invention, at least portions of the side doors 122, 132, and 142 are made of a transparent raw material so that the side doors 122, 132, and 142 serve as viewing windows.

Further, the first chamber 120 and the second chamber 130 include lower coupling areas 123 and 133. The first lower coupling area 123 has the shape formed by extending the side periphery of the first chamber 120 extending in the second direction (the direction of Y-axis) in a downward direction and connecting the extending side periphery to the side periphery of the second chamber 130. The second lower coupling area 133 has the shape formed by extending the side periphery of the second chamber 130 extending in the second direction (the direction of Y-axis) in a downward direction and connecting the extending side periphery to the side periphery of the third chamber 140. According, as shown in FIG. 5, the side peripheries of the first chamber 120, the second chamber 130, and the third chamber 140 are connected to one another in their outer shapes in the second direction (the direction of Y-axis).

The first chamber 120 includes the gas outlet 124 and the raw material introducing hole 125 formed on top thereof. The gas outlet 124, which is an opening from which the remaining gas after the reactions in the reactor 100 is emitted, is coupled to the dust collector 510. The gas outlet 124 has the shape of a rectangle on plane, but it may not be limited thereto. The area of the gas outlet 124 on plane is the same as of underside of the dust collector 510 on plane.

The raw material introducing hole 125 is an opening into which the raw material is introduced from the raw material transfer machine 220. That is, the reactor 100 receives the raw material from the raw material transfer machine 220 through the raw material introducing hole 125. The raw material introducing hole 125 is coupled to the raw material transfer machine 220, but it may not be limited thereto. The planar shape of the raw material introducing hole 125 is circular. The area of the raw material introducing hole 125 on plane is greater than or equal to one end of the raw material transfer machine 220, that is, the area on plane of a portion from which the raw material is discharged.

Further, the first chamber 120 includes a first bottom opening BOP1 formed on the bottom thereof. For example, when the first bottom opening BOP1 is seen on the right side, it is formed on the bottom of the left side of the first chamber 120. The first bottom opening BOP1 is a space in which the raw material moves to the second chamber 130 after reacts in the first chamber 120.

The first bottom opening BOP1 has the shape of a rectangular section on plane, but it may not be limited thereto. The first bottom opening BOP1 includes a first protrusion PTR1 traversing the semi-circular structure of the lower portion of the body 121 in the first direction (in the direction of X-axis). The first protrusion PTR1 has the shape extending in the third direction (the direction of Z-axis) of the semi-circular structure of the lower portion of the body 121. Accordingly, the raw material has a hydration reaction with water in the first chamber 120, with sufficient reaction time, while being prevented from moving to the second chamber 130 unintentionally.

The second chamber 130 includes a first top opening TOP1 formed on the top thereof. For example, when the first top opening TOP1 is seen on the right side, it is formed on the top of the left side of the second chamber 130. The first top opening TOP1, which is a space where the product or raw material produced in the first chamber 120 moves to the second chamber 130, is connected to the first bottom opening BOP1. The planar shape and area of the first top opening TOP1 are the same as of the first bottom opening BOP1.

Further, the second chamber 130 includes a second bottom opening BOP2 formed on the bottom thereof. For example, when the second bottom opening BOP2 is seen on the right side, it is formed on the bottom of the right side of the second chamber 130. The second bottom opening BOP2 is a space in which the product produced in the second chamber 130 moves to the third chamber 140.

The second bottom opening BOP2 has the shape of a rectangular section on plane, but it may not be limited thereto. The second bottom opening BOP2 includes a second protrusion PTR2 traversing the semi-circular structure of the lower portion of the body 131 in the first direction (in the direction of X-axis). Accordingly, the product moving from the first chamber 120 has a hydration reaction with water in the second chamber 130 or a carbonation reaction with gas containing carbon dioxide, with sufficient reaction time. Further, the product having a chemical reaction in the second chamber 130 is prevented from moving to the third chamber 140 unintentionally.

The third chamber 140 includes a second top opening TOP2 formed on the top thereof. For example, when the second top opening TOP2 is seen on the right side, it is formed on the top of the right side of the third chamber 140. The second top opening TOP2, which is a space where the product produced in the second chamber 130 moves to the third chamber 140, is connected to the second bottom opening BOP2. The planar shape and area of the second top opening TOP2 are the same as of the second bottom opening BOP2.

Further, the third chamber 140 includes a third bottom opening BOP3 formed on the bottom thereof. For example, when the third bottom opening BOP3 is seen on the right side, it is formed on the bottom of the left side of the third chamber 140. The third bottom opening BOP3 is a space in which the final product produced in the third chamber 140 is discharged.

The third bottom opening BOP3 has the shape of a circular section on plane, but it may not be limited thereto. The third bottom opening BOP3 includes a third protrusion PTR3 traversing the semi-circular structure of the lower portion of the body 141 in the first direction (in the direction of X-axis). Accordingly, the product moving from the second chamber 130 has a carbonation reaction with gas containing carbon dioxide, with sufficient reaction time. Further, the product having a chemical reaction in the third chamber 140 is prevented from moving to the outside unintentionally.

The third bottom opening BOP3 is a space in which the final product produced in the reactor 100 moves to the product transfer machine 620. The third bottom opening BOP3 is coupled to the product transfer machine 620, but it may not be limited thereto. The planar area of the third bottom opening BOP3 is smaller than or equal to one end of the product transfer machine 620, that is, the planar area of a portion into which the final product is introduced.

In FIGs. 5 and 6, the gas outlet 124, the raw material introducing hole 125, the first to third bottom openings BOP1, BOP2, and BOP3, and the first and second top openings TOP1 and TOP2 have the shapes of rectangles or circles on plane, but they may have various shapes on plane such as squares, triangles, polygons, ovals, and the like.

Further, the raw material introducing hole 125, the first to third bottom openings BOP1, BOP2, and BOP3, and the first and second top openings TOP1 and TOP2 may not be limited in positions by the embodiment of the present invention. For example, the raw material introducing hole 125 and the first to third bottom openings BOP1, BOP2, and BOP3 may be formed misalignedly on the opposite side to one another in the second direction (the direction of Y-axis or the horizontal direction). In specific, if the raw material introducing hole 125 is formed on top of the left side of the first chamber 120, the first bottom opening BOP1 is formed on bottom of the right side of the first chamber 120, the second bottom opening BOP2 on the bottom of the left side of the second chamber 130, and the third bottom opening BOP3 on the bottom of the right side of the third chamber 140.

The first to third agitators 150, 160, and 170 serve to agitate the substances provided in the internal spaces of the first to third chambers 120, 130, and 140 to increase reaction efficiencies and speeds. The first to third agitators 150, 160, and 170 include driving motors 151, 161, and 171, gears 152, 162, and 172, agitating shafts 153, 163, and 173, and the plurality of agitating wings 154, 164, and 174.

The first to third driving motors 151, 161, and 171 are rotary devices for converting electrical energy into mechanical energy to generate driving forces. The first to third driving motors 151, 161, and 171 are disposed on the three side protrusions 114. The first to third driving motors 151, 161, and 171 are electrically connected to the motor controller 800 to receive power from the motor controller 800 and operate by the electrical signals generated from the motor controller 800.

The first to third gears 152, 162, and 172 receive the mechanical energy generated from the first to third driving motors 151, 161, and 171 and convert the mechanical energy into revolutions per minute needed for agitation. The first to third gears 152, 162, and 172 are disposed on one side surface of the first to third chambers 120, 130, and 140.

The first to third gears 152, 162, and 172 include belts and pulleys, but they may not be limited thereto. For example, the first to third gears 152, 162, and 172 may be gear boxes directly connected to the first to third driving motors 151, 161, and 171.

The first to third agitating shafts 153, 163, and 173 are connected to the first to third gears 152, 162, and 172 to transfer rotary forces according to the revolutions per minute. The first to third agitating shafts 153, 163, and 173 have the shapes of bars with circular sections. The first to third agitating shafts 153, 163, and 173 extend from the first to third gears 152, 162, and 172 in the second direction (the direction of Y-axis) and penetrate the two sides of the first to third chambers 120, 130, and 140.

Both ends of the first to third agitating shafts 153, 163, and 173 are fixed by fixing members (not shown) fixedly disposed on the longitudinal support rods 112_1. The fixing members should not interfere with the rotations of the first to third agitating shafts 153, 163, and 173.

The plurality of agitating wings 154, 164, and 174 are disposed on the first to third agitating shafts 153, 163, and 173. For example, each agitating wing 154, 164, and 174 has two blades, and the three agitating wings are spaced apart from one another in the second direction (the direction of Y-axis) on each agitating shaft. In embodiments of the present invention, each agitating wing may have three or more blades, and two or less agitating wings or four or more agitating wings may be disposed on each agitating shaft.

The agitating wings 154, 164, and 174 are configured to allow the blades to be arranged at given angles in symmetrically shapes or around the agitating shafts 153, 163, and 173, and as the agitating shafts 153, 163, and 173 rotate, accordingly, the agitating wings 154, 164, and 174 rotate in circular orbits inside the first to third chambers 120, 130, and 140.

The agitating wings 154, 164, and 174 are paddle impellers, and they may be pitched impellers slant around a center axis of the first direction (the direction of X-axis). However, they may not be limited thereto. The agitating wings 154, 164, and 174 rotate in circular orbits according to the rotations of the agitating shafts 153, 163, and 173 and agitate the substances provided in the first to third chambers 120, 130, and 140 to thus accelerate the reactions of the substances and simultaneously move the substances in the horizontal direction.

For example, the plurality of first agitating wings 154 serve to agitate the substances in the first chamber 120 and move the agitated substances in the opposite direction to the second direction (the direction of Y-axis), the plurality of second agitating wings 164 serve to agitate the substances in the second chamber 130 and move the agitated substances in the second direction (the direction of Y-axis), and the plurality of third agitating wings 174 serve to agitate the substances in the third chamber 140 and move the agitated substances in the opposite direction to the second direction (the direction of Y-axis).

For another example, if the first bottom opening BOP1 is formed on bottom of the right side of the first chamber 120, the second bottom opening BOP2 on the bottom of the left side of the second chamber 130, and the third bottom opening BOP3 on the bottom of the right side of the third chamber 140, the pitch directions of the agitating wings 154, 164, and 174 are changed to the opposite directions thereto. In specific, the plurality of first agitating wings 154 move the substances of the first chamber 120 in the second direction (the direction of Y-axis), the plurality of second agitating wings 164 move the substances of the second chamber 130 in the second direction (the direction of Y-axis), and the plurality of third agitating wings 174 move the substances of the third chamber 140 in the opposite direction to the second direction (the direction of Y-axis).

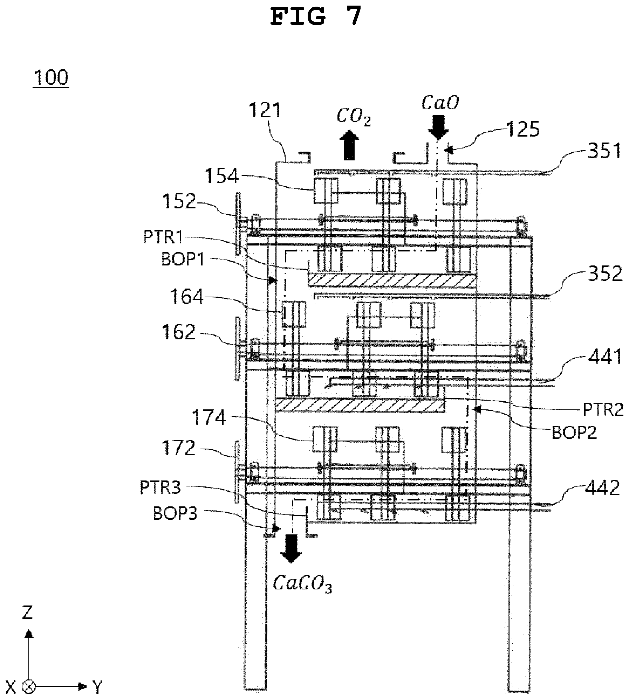

FIG. 7 is a right side view showing a path along which hydration and carbonation processes are carried out in the reactor of FIGs. 5 and 6.

Referring to FIG. 7, the reactor 100 receives the raw material from the raw material tank 210 through the raw material transfer machine 220. The raw material contains calcium oxide (CaO), and for example, the raw material may be desulfurized gypsum (CaO·CaSO₄) as a by-product of a desulfurization process, but it may not be limited thereto.

The first chamber 120 receives the raw material through the raw material introducing hole 125 and receives water from the plurality of nozzles of the first water introducing pipe 351 inserted thereinto. When seen on the right side, the raw material received from the raw material introducing hole 125 formed on top of the right side of the first chamber 120 moves in the first chamber 120 in the opposite direction to the second direction (the direction of Y-axis) by means of the first agitator 150 and simultaneously mixes with the water received from the first water introducing pipe 351.

Accordingly, the calcium oxide (CaO) contained in the raw material reacts with water (H₂O) in the first chamber 120 to perform the hydration reaction for producing calcium hydroxide (Ca(OH)₂).

Further, the first bottom opening BOP1 of the first chamber 120, which communicates with the second chamber 130, has the first protrusion PTR1 protruding in the third direction (the direction of Z-axis), so that the raw material has the hydration reaction, with sufficient reaction time, while being prevented from moving to the second chamber 130 unintentionally.

The second chamber 130 receives the gas containing carbon dioxide from the plurality of nozzles of the first gas introducing pipe 441 and receives water from the plurality of nozzles of the second water introducing pipe 352.

The second chamber 130 receives the raw material containing calcium hydroxide (Ca(OH)₂) and calcium oxide (CaO) from the first chamber 120. The calcium hydroxide (Ca(OH)₂) and calcium oxide (CaO) moving from the first chamber 120 to the second chamber 130 through the first bottom opening BOP1 or the first top opening TOP1 move in the second chamber 130 in the second direction (the direction of Y-axis) by means of the second agitator 160 and simultaneously mixes with carbon dioxide or water.

The calcium hydroxide (Ca(OH)₂) and calcium oxide (CaO) have the carbonation reaction and the hydration reaction in the second chamber 130. In specific, the calcium hydroxide (Ca(OH)₂) reacts with carbon dioxide (CO₂) in the second chamber 130 to produce calcium carbonate (CaCO₃), and the calcium oxide (CaO) reacts with water (H₂O) in the second chamber 130 to produce calcium hydroxide (Ca(OH)₂). Further, the calcium hydroxide (Ca(OH)₂) produced in the second chamber 130 reacts with carbon dioxide (CO₂) to produce calcium carbonate (CaCO₃). That is, the hydration and carbonation reactions of calcium oxide (CaO) and the carbonation reaction of calcium hydroxide (Ca(OH)₂) are performed in the second chamber 130.

Further, the second bottom opening BOP2 of the second chamber 130, which communicates with the third chamber 140, has the second protrusion PTR2 protruding in the third direction (the direction of Z-axis), so that the raw material or calcium hydroxide (Ca(OH)₂) has the hydration reaction and/or carbonation reaction, with sufficient reaction time, while being prevented from moving to the third chamber 140 unintentionally.

The third chamber 140 receives the gas containing carbon dioxide from the plurality of nozzles of the second gas introducing pipe 442.

The third chamber 140 receives calcium hydroxide (Ca(OH)₂) and calcium carbonate (CaCO₃) from the second chamber 130. The calcium hydroxide (Ca(OH)₂) and calcium carbonate (CaCO₃) moving from the second chamber 130 to the third chamber 140 through the second bottom opening BOP2 or the second top opening TOP2 move in the third chamber 140 in the opposite direction to the second direction (the direction of Y-axis) by means of the third agitator 170 and simultaneously mixes with the gas containing carbon dioxide.

The calcium hydroxide (Ca(OH)₂) reacts with carbon dioxide (CO₂) in the third chamber 140 to produce calcium carbonate (CaCO₃), and the calcium carbonate (CaCO₃) produced in the third chamber 140 and the calcium carbonate (CaCO₃) received from the second chamber 120 are discharged to the outside through the third bottom opening BOP2, as the final product of the reactor 100.

Further, the third bottom opening BOP3 of the third chamber 140 has the third protrusion PTR3 protruding in the third direction (the direction of Z-axis), so that the calcium hydroxide (Ca(OH)₂) has the carbonation reaction, with sufficient reaction time, while being prevented from moving to the outside unintentionally.

The calcium carbonate (CaCO₃) discharged through the third bottom opening BOP3 is transferred to the product storage tank 610 through the product transfer machine 620.

The remaining gas after the reactions in the first to third chambers 120, 130, and 140 is emitted through the dust collector 510 coupled to the gas outlet 124 of the first chamber 120. The internal pressures of the first to third chambers 120, 130, and 140 are lower than an atmospheric pressure by means of the exhaust fan 520, and the flows of gas in the first to third chambers 120, 130, and 140 are formed in the direction toward the dust collector 510, that is, toward the gas outlet 124, to allow the remaining gas to be emitted through the dust collector 510.

Like this, the reactor 100 in the embodiment of the present invention makes use of the recycled resource containing calcium oxide (CaO) and the exhaust gas containing carbon dioxide emitted in various processes as raw materials for producing calcium carbonate (CaCO₃), thereby decreasing an amount of waste generated and reducing greenhouse gas emissions.

Further, the reactor 100 in the embodiment of the present invention allows the hydration process of calcium oxide (CaO) and the carbonation process of calcium hydroxide (Ca(OH)₂) to be carried out sequentially therein in a semi-dry process to produce calcium carbonate (CaCO₃). Accordingly, the carbonation process using the recycled resource as the raw material is more simplified than a wet process wherein filtering and drying are performed after wet carbonation, thereby advantageously reducing the time and cost required to manufacture calcium carbonate (CaCO₃).

Furthermore, the described features, structures, or characteristics may be combined in any suitable manner in one or more embodiments and freely cooperatively operate with one another, and the respectively embodiments may be performed independently of each other or combinedly with each other.

As mentioned above, the preferred embodiment of the present invention has been disclosed in the specification and drawings. In the description of the present invention, special terms are used not to limit the present invention and the scope of the present invention as defined in claims, but just to explain the present invention. Therefore, persons skilled in the relevant art can appreciate that many modifications and variations are possible in light of the above teachings. It is therefore intended that the scope of the invention be limited not by this detailed description, but rather by the claims appended hereto.

## Claims

1. A reactor (100) comprising:
a plurality of chambers (120, 130, 140);
a support structure (110) for supporting the plurality of chambers (120, 130, 140); and
a plurality of agitators (150, 160, 170) disposed correspondingly to the plurality of chambers (120, 130, 140) to agitate substances disposed in the plurality of chambers (120, 130, 140),
wherein the plurality of chambers (120, 130, 140) comprise first to third chambers (120, 130, 140) coupled sequentially to one another in a thickness direction of the reactor (100), each chamber (120, 130, 140) comprising a body (121, 131, 141) having a lower portion having the shape of a semi-cylinder and an opening (TOP1, TOP2, BOP1, BOP2, BOP3) formed on the body (121, 131, 141) to communicate with the neighboring chamber (120, 130, 140) or the outside,
the first chamber (120) having a first water introducing pipe (351) for supplying water to the first body (121),
the second chamber (130) having a second water introducing pipe (352) for supplying water to the second body (131) and a first gas introducing pipe (441) for supplying gas to the second body(131), and
the third chamber (140) having a second gas introducing pipe (442) for supplying gas to the third body (141).

2. The reactor (100) according to claim 1, wherein the first chamber (120) comprises a raw material introducing hole (125) formed on one side of top of the first body (121) to receive a raw material and a first bottom opening (BOP1) formed on the other side of bottom of the first body (121) to communicate with the second chamber (130), the first bottom opening (BOP1) having a first protrusion (PTR1) protruding upward therefrom, and the first agitator (150) disposed correspondingly to the first chamber (120) agitates the first substance in the first chamber (120) and moves the first substance from one side to the other side of the first body (121).

3. The reactor (100) according to claim 2, wherein the raw material is a recycled resource containing calcium oxide (CaO).

4. The reactor (100) according to claim 2, wherein the second chamber (130) comprises a first top opening (TOP1) formed on the other side of top of the second body (131) to be connected to the first bottom opening (BOP1) and a second bottom opening (BOP2) formed on one side of bottom of the second body (131) to communicate with the third chamber (140),
the second bottom opening (BOP2) having a second protrusion (PTR2) protruding upward therefrom, and
the second agitator (160) disposed correspondingly to the second chamber (130) agitates the second substance in the second chamber (130) and moves the second substance from the other side to one side of the second body (131).

5. The reactor (100) according to claim 4, wherein the gas is exhaust gas containing carbon dioxide (CO₂) and the second substance contains calcium oxide (CaO) and calcium hydroxide (Ca(OH)₂).

6. The reactor (100) according to claim 4, wherein the third chamber (140) comprises a second top opening (TOP2) formed on one side of top of the third body (141) to be connected to the second bottom opening (BOP2) and a third bottom opening (BOP3) formed on the other side of bottom of the third body (141) to communicate with the outside,
the third bottom opening (BOP3) having a third protrusion (PTR3) protruding upward therefrom, and
the third agitator (170) disposed correspondingly to the third chamber (140) agitates the third substance in the third chamber (140) and moves the third substance from one side to the other side of the third body (141).

7. The reactor (100) according to claim 6, wherein the gas is exhaust gas containing carbon dioxide (CO₂) and the third substance contains calcium hydroxide (Ca(OH)₂) and calcium carbonate (CaCO₃).

8. The reactor (100) according to claim 1, wherein the first chamber (120) comprises a gas outlet (124) formed on one side of top of the first body (121) to emit the remaining gas after the reactions in the first to third chambers (120, 130, 140), and the gas outlet (124) is connected to an exhaust fan (520) and a dust collector (510) for allowing the internal pressures of the first to third chamber (120, 130, 140) to be kept lower than an atmospheric pressure.

9. The reactor (100) according to claim 1, wherein each agitator (150, 160, 170) comprises:
a driving motor (151, 161, 171) for converting electrical energy into mechanical energy;
a gear (152, 162, 172) connected to the driving motor (151, 161, 171) to convert the mechanical energy into revolutions per minute needed for the agitating;
an agitating shaft (153, 163, 173) connected to the gear (152, 162, 172) to transfer a rotary force according to the revolutions per minute; and
a plurality of agitating wings (154, 164, 174) spaced apart from one another on the agitating shaft (153, 163, 173) to rotate in circular orbits according to the rotation of the agitating shaft (153, 163, 173).

10. The reactor (100) according to claim 1, wherein the first water introducing pipe (351) and the second water introducing pipe (352) are disposed close to upper portions of the first body (121) and the second body (131) to supply the water in downward directions, and the first gas introducing pipe (441) and the second gas introducing pipe (442) are disposed close to lower portions of the second body (131) and the third body (141).

11. Carbonation equipment (1) comprising:
a raw material tank (210) for storing a raw material containing calcium oxide (CaO);
a raw material transfer machine (220) for transferring the raw material to a reactor (100);
the reactor (100) for allowing the raw material to react with water and carbon dioxide to produce calcium carbonate (CaCO₃);
water introducing pipes (350, 351, 352) for supplying the water to the reactor (100); and
gas introducing pipes (440, 441, 442) for supplying gas containing the carbon dioxide to the reactor (100).

12. The carbonation equipment (1) according to claim 11, wherein the water introducing pipes (350, 351, 352) comprise a first water introducing pipe (351) and a second water introducing pipe (352), and the gas introducing pipes (440, 441, 442) comprise a first gas introducing pipe (441) and a second gas introducing pipe (442);
the reactor (100) comprises:
a plurality of chambers (120, 130, 140);
a support structure (110) for supporting the plurality of chambers (120, 130, 140); and
a plurality of agitators (150, 160, 170) disposed correspondingly to the plurality of chambers (120, 130, 140) to agitate substances disposed in the plurality of chambers (120, 130, 140),
the plurality of chambers (120, 130, 140) comprising first to third chambers (120, 130, 140) coupled sequentially to one another in a thickness direction of the reactor (100),
each chamber (120, 130, 140) comprising a body (121, 131, 141) having a lower portion having the shape of a semi-cylinder and an opening (TOP1, TOP2, BOP1, BOP2, BOP3) formed on the body (121, 131, 141) to communicate with the neighboring chamber (120, 130, 140) or the outside; and
the first water introducing pipe (351) penetrates the first body (121) of the first chamber (120),
the second water introducing pipe (352) and the first gas introducing pipe (441) penetrate the second body (131) of the second chamber (130), and
the second gas introducing pipe (442) penetrates the third body (141) of the third chamber (140).

13. The carbonation equipment (1) according to claim 12, wherein the first chamber (120) comprises a raw material introducing hole (125) formed on one side of top of the first body (121) to receive the raw material; the first chamber (120), the second chamber (130), and the third chamber (140) comprise first to third bottom openings (BOP1, BOP2, BOP3) formed on the bottoms of the first body (121), the second body(131), and the third body (141) to communicate with the neighboring chambers (120, 130, 140) or the outside; and the raw material introducing hole (125) and the first to third bottom openings (BOP1, BOP2, BOP3) are misalignedly formed on the opposite side to one another in a horizontal direction of the reactor (100).

14. The carbonation equipment (1) according to claim 13, wherein the first agitator (150) disposed correspondingly to the first chamber (120) moves the substance in the first chamber (120) from the raw material introducing hole (125) to the first bottom opening (BOP1);
the second agitator (160) disposed correspondingly to the second chamber (130) moves the substance in the second chamber (130) from the first bottom opening (BOP1) to the second bottom opening (BOP2); and
the third agitator (170) disposed correspondingly to the third chamber (140) moves the substance in the third chamber (140) from the second bottom opening (BOP2) to the third bottom opening (BOP3).

15. The carbonation equipment (1) according to claim 14, wherein the first to third bottom openings (BOP1, BOP2, BOP3) comprise first to third protrusions (PTR1, PTR2, PTR3) protruding upward therefrom.

16. The carbonation equipment (1) according to claim 12, wherein each agitator (150, 160, 170) comprises:
a driving motor (151, 161, 171) for converting electrical energy into mechanical energy;
a gear (152, 162, 172) connected to the driving motor (151, 161, 171) to convert the mechanical energy into revolutions per minute needed for the agitating;
an agitating shaft (153, 163, 173) connected to the gear (152, 162, 172) to transfer a rotary force according to the revolutions per minute; and
a plurality of agitating wings (154, 164, 174) spaced apart from one another on the agitating shaft (153, 163, 173) to rotate in circular orbits according to the rotation of the agitating shaft (153, 163, 173).

17. The carbonation equipment (1) according to claim 12, wherein the first water introducing pipe (351) and the second water introducing pipe (352) are disposed close to upper portions of the first body (121) and the second body (131) to supply the water in downward directions, and the first gas introducing pipe (441) and the second gas introducing pipe (442) are disposed close to lower portions of the second body (131) and the third body (141).

18. The carbonation equipment (1) according to claim 12, further comprising:
a dust collector (510) for emitting the remaining gas in the reactor (100); and
an exhaust fan (520) disposed inside the dust collector (510) to allow the internal pressure of the reactor (100) to be lower than an atmospheric pressure,
the first chamber (120) having a gas outlet (124) formed on one side of top of the first body (121) to emit the remaining gas, the gas outlet being connected to the dust collector (510).

19. The carbonation equipment (1) according to claim 11, further comprising:
a blower (411) coupled to one end of a gas transfer pipe (430), absorbing external air, and to move the absorbed air to the gas transfer pipe (430);
a carbon dioxide storage cylinder (420) coupled to the gas transfer pipe (430) to supply carbon dioxide; and
a heater (412) for heating the gas moving along the gas transfer pipe (430), the other end of the gas transfer pipe (430) being connected to the gas introducing pipe (440, 441, 442).

20. The carbonation equipment (1) according to claim 11, wherein the gas introducing pipe (440, 441, 442) is connected to another processing device for emitting exhaust gas.
